# EUROPEAN PATENT SPECIFICATION

(11) **EP 2 748 216 B1**
(45) Date of publication and mention of the grant of the patent: **25.11.2015**
(21) Application number: 12778933.7
(22) Date of filing: 19.10.2012
(51) Int. Cl.: C08F 285/00, C08F 220/18, C08K 3/20

(54) **NETWORK POLYMERS USEFUL FOR SUSPENDING PARTICLES**
NETZWERKPOLYMERE FÜR SCHWEBENDE TEILCHEN
POLYMÈRES RÉTICULÉS UTILES POUR LA MISE EN SUSPENSION DE PARTICULES

(30) Priority: 28.10.2011 US 201161552624 P
(43) Date of publication of application: 02.07.2014
(73) Proprietor: Rohm and Haas Company, Philadelphia, PA 19106 (US); Dow Global Technologies LLC, Midland, MI 48674 (US)
(72) Inventor: CREAMER, Marianne P., Warrington, PA 18976 (US); DOMBROWSKI, Gary William, West Chester, PA 19382 (US); GREYSON, Eric, North Wales, PA 19454 (US); WASSERMAN, Eric P., Hopewell, NJ 08525 (US)
(74) Representative: Houghton, Mark Phillip
(86) International application number: PCT/US2012/061049
(87) International publication number: WO 2013/062868

(56) References cited:
- EP-A2- 0 254 467
- US-A- 5 030 666

## Description

### Background

This invention generally relates to polymer particles having a core surrounded by lobes.

Polymers having a core surrounded by lobes are known. For example, U.S. Patent 4,791,151 discloses polymers having this structure which are useful in coatings and adhesive applications. However, the compositions disclosed for these polymers are limited.

The problem solved by the present invention is to provide a polymer having improved ability to suspend solid particles and air bubbles in aqueous media.

### Statement of the Invention

The present invention is directed to polymer particles having an average diameter from 100 nm to 10 µm, where each particle comprises: (a) a core; and (b) lobes comprising at least 15 wt% polymerized residues of at least one C₃-C₆ carboxylic acid monomer.

The present invention is further directed to a thickened aqueous formulation containing the polymer particles and having a pH of at least 6.

The present invention is further directed to a method for producing the polymer particles by steps of: (a) providing a seed particle comprising at least 20 wt% polymerized residues of at least one C₃-C₆ carboxylic acid monomer and at least 0.1 wt% polymerized residues of at least one crosslinker; (b) suspending the seed particle in an aqueous emulsion with a first monomer mixture having an average Van Krevelen parameter that is lower than that of the seed particle by at least 0.5 J^{0.5}cm^{-1.5} and polymerizing said first monomer mixture; and (c) adding to the aqueous emulsion a second monomer mixture and polymerizing said second monomer mixture; wherein the first and second monomer mixtures comprise at least 15 wt% C₃-C₆ carboxylic acid monomers, based on total weight of the first and second monomer mixtures.

### Detailed Description of the Invention

All percentages are weight percentages (wt%), all fractions are by weight and all temperatures are in °C, unless otherwise indicated. Percentages of polymerized monomer residues in polymers or phases of polymers (e.g., core, lobes) are based on the entire weight of the solid polymer or polymer phase. Measurements made at "room temperature" (room temp.) were made at 20-25 °C. As used herein the term "(meth)acrylic" refers to acrylic or methacrylic. The Van Krevelen solubility parameters (δₜ) are calculated according to the method of Hoftyzer and Van Krevelen as described in "Properties of Polymers: Their Correlation with Chemical Structure; Their Numerical Estimation and Prediction from Additive Group Contributions," D. W. Van Krevelen, 3rd. Edn., Elsevier, Amsterdam, 1990, pp. 74-5 and 213, typically in units of J^{0.5}/cm^{1.5}. A "C₃-C₆ carboxylic acid monomer" is a mono-ethylenically unsaturated compound having one or two carboxylic acid groups, e.g., (meth)acrylic acid, maleic acid, fumaric acid, itaconic acid, maleic anhydride, crotonic acid, etc. Alkyl groups are saturated hydrocarbyl groups which may be straight or branched.

Preferably, the polymer particle is an acrylic polymer, i.e., one having at least 70 wt% polymerized residues of acrylic monomers, preferably at least 80 wt%, preferably at least 90 wt%, preferably at least 95 wt%, preferably at least 98 wt%, preferably at least 99 wt%. Preferably, the core is an acrylic polymer. Preferably, the lobes are an acrylic polymer. Acrylic monomers include (meth)acrylic acids and their C₁-C₂₂ alkyl or hydroxyalkyl esters; crotonic acid, itaconic acid, fumaric acid, maleic acid, maleic anhydride, (meth)acrylamides, (meth)acrylonitrile and alkyl or hydroxyalkyl esters of crotonic acid, itaconic acid, fumaric acid or maleic acid. The acrylic polymer may also comprise other polymerized monomer residues including, e.g., non-ionic (meth)acrylate esters, cationic monomers, monounsaturated dicarboxylates, vinyl esters of C₁-C₂₂ alkyl carboxylic acids, vinyl amides (including, e.g., N-vinylpyrrolidone), sulfonated acrylic monomers, vinyl sulfonic acid, vinyl halides, phosphorus-containing monomers, heterocyclic monomers, styrene and substituted styrenes. Preferably, the polymer contains no more than 5 wt% sulfur- or phosphorus-containing monomers, preferably no more than 3 wt%, preferably no more than 2 wt%, preferably no more than 1 wt%, preferably no more than 0.5 wt%.

Preferably, the core of the polymer particles is derived from a seed particle comprising at least 20 wt% polymerized residues of at least one C₃-C₆ carboxylic acid monomer and at least 0.1 wt% polymerized residues of at least one crosslinker. Preferably, the core is from 0.1 to 10 wt% of the entire polymer particle, preferably from 0.25 to 5 wt%, preferably from 0.5 to 2 wt%. Preferably, the core has a diameter from 40 to 1000 nm, preferably from 50 to 250 nm. Preferably the core comprises at least 30 wt% polymerized residues of at least one C₃-C₆ carboxylic acid monomer, preferably at least 40 wt%, preferably at least 50 wt%, preferably at least 60 wt%. Preferably the core comprises at least 0.2 wt% polymerized residues of at least one crosslinker, preferably at least 0.5 wt%, preferably at least 1 wt%, preferably at least 2 wt%, preferably at least 3 wt%. Preferably the core comprises no more than 10 wt% polymerized residues of at least one crosslinker, preferably no more than 8 wt%, preferably no more than 7 wt %.

Preferably, the polymer particles are provided as an aqueous composition containing the polymer as discrete particles dispersed in an aqueous medium, i.e., a polymer latex. In this aqueous dispersion, the average particle diameter of the polymer particles preferably is in the range from 100 to 2000 nm, preferably from 100 to 1000 nm, The level of polymer particles in the aqueous dispersion is typically in the range of from 15 to 60 wt %, preferably 25 to 50 wt%, based on the weight of the aqueous dispersion.

A thickened aqueous formulation contains from 0.05 to 5 wt% of the polymer particles, calculated on a polymer solids basis relative to the entire weight of the aqueous formulation. Preferably, a thickened aqueous formulation contains at least 0.2 wt% of the polymer particles, preferably at least 0.3 wt%, preferably at least 0.4 wt%, preferably at least 0.5 wt%, preferably at least 0.6 wt%, preferably at least 0.8 wt%, preferably at least 0.9 wt%. Preferably, a thickened aqueous formulation contains no more than 4 wt% of the polymer particles, preferably no more than 3 wt%, preferably no more than 2.5 wt%, preferably no more than 2 wt%, preferably no more than 1.8 wt%.

Preferably, the polymer particle has at least three lobes, preferably at least five. Preferably, the lobes of the polymer particle are substantially spherical in shape, i.e., the ratio of their maximum diameter to their minimum diameter is no greater than 1.5, preferably no greater than 1.3, preferably no greater than 1.2. Preferably, the lobes of the polymer particle comprise at least 18 wt% polymerized residues of C₃-C₆ carboxylic acid monomers, preferably at least 20 wt%, preferably at least 22 wt%, preferably at least 24 wt%, preferably at least 26 wt %, preferably at least 28 wt%, preferably at least 30 wt%, preferably at least 32 wt%. Preferably, the lobes of the polymer particle comprise no more than 90 wt% polymerized residues of C₃-C₆ carboxylic acid monomers, preferably no more than 85 wt%, preferably no more than 80 wt%, preferably no more than 75 wt%, preferably no more than 70 wt%, preferably no more than 65 wt%, preferably no more than 60 wt%, preferably no more than 55 wt%, preferably no more than 50 wt%. Preferably, the C₃-C₆ carboxylic acid monomer is a C₃-C₄ carboxylic acid monomer; preferably a C₃-C₄ carboxylic acid monomer having one carboxylic acid group; preferably (meth)acrylic acid, preferably methacrylic acid (MAA). Preferably, the lobes of the polymer particle comprise no more than 40 wt% of polymerized residues of acrylic acid (AA), preferably no more than 35 wt%, preferably no more than 30 wt%, preferably no more than 25 wt%, preferably no more than 20 wt%. Preferably, the lobes comprise from 90 to 99.9 wt% of the entire polymer particle, more preferably from 95 to 99.75 wt%, most preferably from 98 to 99.5 wt%.

In the method of this invention, preferably the Van Krevelen parameter of the seed particle is lower than that of the first monomer mixture by at least 0.5 J^{0.5}cm^{1.5}, preferably at least 0.6, preferably at least 0.65, preferably at least 0.7, preferably at least 0.75. Preferably, the first monomer mixture comprises at least 40 wt% of C₁-C₄ alkyl (meth)acrylates, preferably at least 60 wt%. Preferably, the first monomer mixture comprises no more than 10 wt% of C₃-C₆ carboxylic acid monomers, C₂-C₆ hydroxyalkyl (meth)acrylates, poly(ethylene glycol) (meth)acrylates, (meth)acrylamide or mono- or di-C₁-C₃ alkyl (meth)acrylamides; preferably no more than 8 wt%, preferably no more than 6 wt%, preferably no more than 4 wt%, preferably no more than 3 wt%, preferably no more than 2 wt%. Preferably, the first monomer mixture comprises at least 40 wt% of C₁-C₈ alkyl (meth)acrylates, preferably at least 50 wt%, preferably at least 60 wt%, preferably at least 70 wt%, preferably at least 80 wt%. Preferably, the first monomer mixture comprises at least 30 wt% of C₂-C₈ alkyl (meth)acrylates, preferably at least 40 wt%, preferably at least 50 wt%; preferably the C₂-C₈ alkyl (meth)acrylate is butyl (meth)acrylate, preferably butyl acrylate. Preferably, the second monomer mixture comprises at least 18 wt% of C₃-C₆ carboxylic acid monomers, preferably at least 20 wt%, preferably at least 22 wt%, preferably at least 24 wt%, preferably at least 26 wt %, preferably at least 28 wt%, preferably at least 30 wt%, preferably at least 32 wt%. Preferably, the second monomer mixture comprises no more than 90 wt% of C₃-C₆ carboxylic acid monomers, preferably no more than 85 wt%, preferably no more than 80 wt%, preferably no more than 75 wt%, preferably no more than 70 wt%, preferably no more than 65 wt%, preferably no more than 60 wt%, preferably no more than 55 wt%, preferably no more than 50 wt%. Preferably, the second monomer mixture comprises from 85 to 98 wt% of the total weight of the seed particle and the first and second monomer mixtures; more preferably from 86 to 96 wt%, most preferably from 87 to 93 wt%. Preferably, the seed particle is from 0.1 to 10 wt% of total weight of the seed particle and the first and second monomer mixtures, preferably from 0.25 to 5 wt%, preferably from 0.5 to 2 wt%.

Crosslinkers, i.e., monomers having two or more non-conjugated ethylenically unsaturated groups, may be included with the copolymer components during polymerization of any phase of the polymer particle. Preferred examples of such monomers include, e.g., di-or tri-allyl ethers and di- or tri-(meth)acrylyl esters of diols or polyols (e.g., trimethylolpropane diallyl ether, ethylene glycol dimethacrylate), di- or tri-allyl esters of di-or tri-acids, allyl (meth)acrylate, divinyl sulfone, triallyl phosphate, divinylaromatics (e.g., divinylbenzene). Preferably, the amount of polymerized crosslinker residue in the lobes is at least 0.025 wt%, preferably at least 0.05 wt%. Preferably, the amount of polymerized crosslinker residue in the lobes is no more than 5 wt%, preferably no more than 2 wt%, preferably no more than 0.5 wt%.

Preferably, the pH of the thickened aqueous composition is adjusted to be in the range of 6 to 11, preferably from 7 to 10, preferably from 7.5 to 9. Suitable bases to adjust the pH of the formulation include mineral bases such as sodium hydroxide and potassium hydroxide; ammonium hydroxide; and organic bases such as mono-, di- or tri-ethanolamine. Mixtures of bases may be used. Suitable acids to adjust the pH of the aqueous medium include mineral acids such as hydrochloric acid, phosphorus acid, and sulfuric acid; and organic acids such as acetic acid. Mixtures of acids may be used.

Suitable polymerization techniques for use in the method of this invention include emulsion polymerization and solution polymerization. The seed particle may be made either by solution or emulsion polymerization. Preferably, the lobes are made using emulsion polymerization. Aqueous emulsion polymerization processes typically are conducted in an aqueous reaction mixture, which contains at least one monomer and various synthesis adjuvants such as the free radical sources, buffers, and reductants in an aqueous reaction medium. A chain transfer agent may used to limit molecular weight, preferably a mercaptan, preferably a C₈-C₁₂ alkyl mercaptan. The aqueous reaction medium is the continuous fluid phase of the aqueous reaction mixture and contains greater than 50 wt% water and optionally one or more water miscible solvents, based on the weight of the aqueous reaction medium. Suitable water miscible solvents include methanol, ethanol, propanol, acetone, ethylene glycol ethyl ethers, propylene glycol propyl ethers, and diacetone alcohol. Preferably, the aqueous reaction medium contains at least 90 wt% water, preferably at least 95 wt% water, preferably at least 98 wt% water, based on the weight of the aqueous reaction medium.

### Examples

Method of particle size determination: For the seed, particle diameters were determined using a Brookhaven Model BI-90 particle sizer manufactured by Brookhaven Instruments Corporation, Holtsville, New York, U. S. A. For the final polymer latex, particle diameters were determined using a NANOTRAC 150 Particle Size Analyzer, manufactured by MICROTRAC, Inc., Montgomeryville, Pennsylvania, U. S. A.

Method of rheological analysis: Swollen aqueous dispersions of the rheology modifier were prepared by creating 1.5 wt % polymer dispersions in deionized water, neutralized to pH 8.3 ± 0.5 with 10% NaOH in water. Prior to rheological analysis the sample was allowed to stand for 24 h, followed by centrifugation at 3,000 rpm for 5 min. Dynamic oscillatory responses were collected using an AR-2000 rheometer (TA Instruments) using a 60 mm diameter stainless-steel cone with a 0.5° angle and a Peltier plate, run at 25 °C. Samples were conditioned by an initial shear of 5 s⁻¹ for 5 min, followed by a 2 min hold. Frequency was held constant at 1 Hz, and the stress was incremented from 0.05 to 1000 Pa, with 10 points per decade (logarithmically distributed). The point at which G' = G" was calculated using the Rheology Advantage Data Analysis program (TA Instruments) and the crossover yield stress (YS, x-axis value) and G' value at crossover (y-axis value) were recorded. The value of G' at 0.1 Pa shear stress was also tabulated.

Method of transmission electron microscopy (TEM): Samples were diluted 1:200 in deionize water and nebulized onto a TEM support grid. The grids were examined using a Hitachi 7000 TEM and imaged with a GATAN MUTLISCAN 4000 camera.

Example 1. Preparation of a seed particle emulsion. A 2 L glass vessel equipped with overhead agitation, thermocouple, and nitrogen bubbler was charged with 516.25 g deionized water and 0.15 g ACTRENE and heated to 83 °C. In a separate vessel, 18.52 g butyl acrylate (BA), 2.3 methacrylic acid (MAA), and 203.2 g methyl methacrylate (MMA) were mixed with 140 g deionized water and 2.3 g fatty alcohol ether sulfate sodium salt (DISPONIL FES 993, 30% solution, Cognis) until emulsified. A portion of this emulsion (43.97 g) was fed to the reactor, followed by a solution of 1.6 g sodium persulfate in 16.25 g deionized water. To the emulsion holding vessel were added (1) 4.65 g DISPONIL FES 993 washed in with 7.5 g deionized water, (2) 129.05 g methacrylic acid washed in with 7.5 g deionized water, and (3) 9.8 g 1,3-butylene glycol dimethacrylate (1,3-BGDMA) washed in with 7.5 g deionized water. After the initial exotherm in the reactor had peaked, the contents of the emulsion holding vessel were fed to the reactor over a period of 90 min at 84 °C, followed by rinses amounting to 45 g deionized water. The reactor was held at 84 °C for 15 min after the exhaustion of the monomer emulsion, followed by cooling to room temperature and filtration through a 100 mesh screen. The pH of the emulsion was 2.9. The average particle diameter was determined to be 188 nm. The polymer emulsion was found to contain 32.6 wt % solids, 80 ppm residual butyl acrylate and 294 ppm residual methyl methacrylate.

Example 2. Preparation of a microgel rheology modifier with enhanced suspending power. A 2 L glass vessel equipped with overhead agitation, thermocouple, and nitrogen bubbler was charged with 199.4 g deionized water and 0.27 g acetic acid and heated to 75 °C. A portion (15.1 g) of the seed emulsion from Example 1 was rinsed into the reactor with 11.8 g deionized water. In a separate vessel, 10.1 g deionized water, 0.29 g anionic sulfate surfactant (TRITON XN-45S, 60% solution, Dow), 0.036 g trimethylolpropane diallyl ether (TMPDE), 14.51 g methyl methacrylate (MMA), 0.43 g acrylic acid (AA), and 18.24 g butyl acrylate (BA) were mixed until emulsified (ME1). A portion (16.43 g) of ME1 was added to the reactor, followed by a solution of 0.74 ammonium persulfate in 10.35 g deionized water. At this point solutions of ammonium persulfate (1.72 g in 65 g deionized water) and sodium bisulfite (0.84 g in 65 g deionized water) were fed simultaneously via syringe pumps over the next 105 min. Following the initiation of the syringe pump feeds, a solution of 0.198 g sodium bisulfite in 5.7 g deionized water was poured into the reactor followed by 7.8 g of a 0.15 % solution of iron(II) sulfate in water. Then the remainder of ME1 was fed over a period of 9.25 min followed by a rinse with 10 g deionized water. A second monomer emulsion (ME2) was prepared from 273.5 g deionized water, 7.06 g TRITON XN-45S, 0.56 g TMPDE, 243.8 g ethyl acrylate (EA), 23.3 g 2-ethylhexyl acrylate (EHA), 18.95 vinyl neodecanoate (VEOVA), and 179.84 g MAA. This was pumped into the reactor at a rate of 3.6 mL/min for 10.75 min, followed by 6 mL/min for 10 min and then 9.66 mL/min for 70 min, followed by a rinse of 50 g deionized water. The reaction temperature during the feeds of ME1 and ME2 was kept at 78 °C. After the feeds of sodium bisulfite and ammonium persulfate were complete, the reactor was held at 78 °C for 5 min and then cooled to 70 °C. At this point a chase solution of t-butyl hydroperoxide (0.221 g in 20.09 g water) and a solution of 0.145 g isoascorbic acid in 20 g deionized water were added to the reactor and the reactor stirred at 70 °C for 30 min followed by cooling to room temperature and filtration through 100 mesh screen. The pH of the emulsion was 2.4. The final emulsion had 36.69% solids, and 9.6, 17, and 6.5 ppm residual EA, EHA, and MAA, respectively.

Comparative Example C1. Demonstration of a process having a single monomer emulsion. A 2 L glass vessel equipped with overhead agitation, thermocouple, and nitrogen bubbler was charged with 199.4 g deionized water and 0.27 g acetic acid and heated to 75 °C. A portion (15.1 g) of the seed emulsion from Example 1 was rinsed into the reactor with 11.8 g deionized water. In a separate vessel, 283.6 g deionized water, 7.35 g TRITON XN-45S, 0.596 g TMPDE, 14.51 g MMA, 18.24 g BA, 243.8 g EA, 23.3 g EHA, 18.95 g VEOVA, 0.43 g AA, and 179.84 g MAA were mixed until emulsified (ME). A portion (16.43 g) of ME was added to the reactor, followed by a solution of 0.74 g ammonium persulfate in 10.35 g deionized water. At this point solutions of ammonium persulfate (1.72 g in 65 g deionized water) and sodium bisulfite (0.84 g in 65 g deionized water) were fed simultaneously via syringe pumps over the next 105 min. Following the initiation of the syringe pump feeds, a solution of 0.198 g sodium bisulfite in 5.7 g deionized water was poured into the reactor followed by 7.8 g of a 0.15 % solution of iron(II) sulfate in water. Then the remainder of ME was fed over a period of 100 min (7.6 g/min) followed by a rinse of 60 g deionized water. The reaction temperature during the feed of ME was kept at 78 °C. After the feeds of sodium bisulfite and ammonium persulfate were complete, the reactor was held at 78 °C for 5 min and then cooled to 70 °C. At this point a chase solution of t-butyl hydroperoxide (0.221 g in 20.09 g water) and a solution of 0.145 g isoascorbic acid in 20 g deionized water were added to the reactor and the reactor stirred at 70 °C for 30 min followed by cooling to room temperature and filtration through 100 mesh screen. The pH of the emulsion was 2.6. The final emulsion had 37.33% solids, and 6, 13, and 0 ppm residual EA, EHA, and BA, respectively.

Example 3. Preparation of a microgel rheology modifier with enhanced suspending power. A 2 L glass vessel equipped with overhead agitation, thermocouple, and nitrogen bubbler was charged with 199.4 g deionized water and 0.27 g acetic acid and heated to 75 °C. A portion (15.1 g) of the seed emulsion from Example 1 was rinsed into the reactor with 11.8 g deionized water. In a separate vessel, 10.1 g deionized water, 0.29 g anionic sulfate surfactant (TRITON XN-455, 60% solution, Dow), 0.036 g TMPDE, 14.51 g MMA, 0.43 g AA, and 18.24 g BA were mixed until emulsified (ME1). A portion (16.43 g) of ME1 was added to the reactor, followed by a solution of 0.74 g ammonium persulfate in 10.35 g deionized water. At this point solutions of ammonium persulfate (1.72 g in 65 g deionized water) and sodium bisulfite (0.84 g in 65 g deionized water) were fed simultaneously via syringe pumps over the next 105 min. Following the initiation of the syringe pump feeds, a solution of 0.198 g sodium bisulfite in 5.7 g deionized water was poured into the reactor followed by 7.8 g of a 0.15 % solution of iron(II) sulfate in water. Then the remainder of ME1 was fed over a period of 9.25 min followed by a rinse with 10 g deionized water. A second monomer emulsion (ME2) was prepared from 273.5 g deionized water, 7.06 g TRITON XN-45S, 0.56 g TMPDE, 286.05 g EA, and 179.84 g MAA. This was pumped into the reactor at a rate of 3.6 mL/min for 10.75 min, followed by 6 mL/min for 10 min and then 9.66 mL/min for 70 min, followed by a rinse of 50 g deionized water. The reaction temperature during the feeds of ME1 and ME2 was kept at 78 °C. After the feeds of sodium bisulfite and ammonium persulfate were complete, the reactor was held at 78 °C for 5 min and then cooled to 70 °C. At this point a chase solution of t-butyl hydroperoxide (0.221 g in 20.09 g water) and a solution of 0.145 g isoascorbic acid in 20 g deionized water were added to the reactor and the reactor stirred at 70 °C for 30 min followed by cooling to room temperature and filtration through 100 mesh screen. The pH of the emulsion was 2.5. The final emulsion had 37.68% solids, and 5 and 2 ppm residual EA and BA, respectively.

Comparative Example C2. Demonstration of a process having a single monomer emulsion. A 2 L glass vessel equipped with overhead agitation, thermocouple, and nitrogen bubbler was charged with 199.4 g deionized water and 0.27 g acetic acid and heated to 75 °C. A portion (15.1 g) of the seed emulsion from Example 1 was rinsed into the reactor with 11.8 g deionized water. In a separate vessel, 283.6 g deionized water, 7.35 g TRITON XN-45S, 0.596 g TMPDE, 14.51 g MMA, 18.24 g BA, 286.05 g EA, 0.43 g AA, and 179.84 g MAA were mixed until emulsified (ME). A portion (16.43 g) of ME was added to the reactor, followed by a solution of 0.74 g ammonium persulfate in 10.35 g deionized water. At this point solutions of ammonium persulfate (1.72 g in 65 g deionized water) and sodium bisulfite (0.84 g in 65 g deionized water) were fed simultaneously via syringe pumps over the next 105 min. Following the initiation of the syringe pump feeds, a solution of 0.198 g sodium bisulfite in 5.7 g deionized water was poured into the reactor followed by 7.8 g of a 0.15 % solution of iron(II) sulfate in water. Then the remainder of ME was fed over a period of 100 min (7.6 g/min) followed by a rinse of 60 g deionized water. The reaction temperature during the feed of ME was kept at 78 °C. After the feeds of sodium bisulfite and ammonium persulfate were complete, the reactor was held at 78 °C for 5 min and then cooled to 70 °C. At this point a chase solution of t-butyl hydroperoxide (0.221 g in 20.09 g water) and a solution of 0.145 g isoascorbic acid in 20 g deionized water were added to the reactor and the reactor stirred at 70 °C for 30 min followed by cooling to room temperature and filtration through 100 mesh screen. The pH of the emulsion was 2.6. The final emulsion had 37.7% solids, and 1.6 and 0 ppm residual EA and BA, respectively.

Example 4. In this example the procedure of Example 2 was followed except at higher dilution. A 2 L glass vessel equipped with overhead agitation, thermocouple, and nitrogen bubbler was charged with 249.4 g deionized water and 0.27 g acetic acid and heated to 75 °C. A portion (15.1 g) of the seed emulsion from Example 1 was rinsed into the reactor with 11.8 g deionized water. In a separate vessel, 10.1 g deionized water, 0.29 g anionic sulfate surfactant (TRITON XN-45S, 60% solution, Dow), 0.036 g TMPDE, 14.51 g MMA, 0.43 g AA, and 18.24 g BA were mixed until emulsified (ME1). A portion (16.43 g) of ME1 was added to the reactor, followed by a solution of 0.74 ammonium persulfate in 10.35 g deionized water. At this point solutions of ammonium persulfate (1.72 g in 140 g deionized water) and sodium bisulfite (0.84 g in 140 g deionized water) were fed simultaneously via syringe pumps over the next 105 min. Following the initiation of the syringe pump feeds, a solution of 0.198 g sodium bisulfite in 5.7 g deionized water was poured into the reactor followed by 7.8 g of a 0.15 % solution of iron(II) sulfate in water. Then the remainder of ME1 was fed over a period of 9.25 min followed by a rinse with 10 g deionized water. A second monomer emulsion (ME2) was prepared from 273.5 g deionized water, 7.06 g TRITON XN-45S, 0.56 g TMPDE, 243.8 g EA, 23.3 g EHA, 18.95 VEOVA, and 179.84 g MAA. This was pumped into the reactor at a rate of 3.6 mL/min for 10.75 min, followed by 6 mL/min for 10 min and then 9.66 mL/min for 70 min, followed by a rinse of 50 g deionized water. The reaction temperature during the feeds of ME1 and ME2 was kept at 78 °C. After the feeds of sodium bisulfite and ammonium persulfate were complete, the reactor was held at 78 °C for 5 min and then cooled to 70 °C. At this point a chase solution of t-butyl hydroperoxide (0.221 g in 20.09 g water) and a solution of 0.145 g isoascorbic acid in 20 g deionized water were added to the reactor and the reactor stirred at 70 °C for 30 min followed by cooling to room temperature and filtration through 100 mesh screen. The pH of the emulsion was 2.4. The final emulsion had 31.13% solids.

Example C3. In this example the procedure of Example C1 was followed exactly. The pH of the emulsion was 2.6. The final emulsion had 36.52% solids.

Example 5. Comparison of air-bubble suspending. Dispersion A: An aqueous dispersion of the polymer of Example 4 was prepared by slurrying an appropriate amount of the latex in deionized water followed by adjustment of the pH to 8.3 ± 0.5 by addition of sodium hydroxide solution and addition of enough deionized water to bring the level of polymer in the mixture to 1.5 wt %. Dispersion B: An aqueous dispersion of the polymer of Example C3 was prepared in a similar way. Dispersions A and B were allowed to rest for 1 day after preparation, then were centrifuged to remove air bubbles. Approximately 20 mL of each dispersion were placed in 1 oz. glass scintillation vials and 20 µL air bubbles were injected at the bottom of each using a 100 µL Eppendorf pipettor. The air bubble in Dispersion A moved about 1 mm in 24 h standing at room temperature. This was repeated a second time with the same result. The air bubble in Dispersion B moved 1.5 cm in less than one second. This was repeated four more times with the same result. The vial containing Dispersion A was placed in an oven set at 40 °C and the 20 µL bubbles within it rose an additional 1 mm after 93 h at that temperature.

**Table 1. Rheological analysis and solubility parameters calculated for the various polymer fractions in the examples.**

| Ex. (Final Polymer) | | 2 | C1 | 3 | C2 |
|---|---|---|---|---|---|
| Example (Seed) | | 1 | 1 | 1 | 1 |
| Seed compsn. | MMA | 56.0 | 56.0 | 56.0 | 56.0 |
| | MAA | 36.2 | 36.2 | 36.2 | 36.2 |
| | BA | 5.1 | 5.1 | 5.1 | 5.1 |
| | 1,3-BGDMA | 2.6 | 2.6 | 2.6 | 2.6 |
| ME1 wt fr. | | 0.065 | - | 0.065 | - |
| ME1 compsn. | MMA | 43.684 | - | 43.684 | - |
| | MAA | - | - | - | - |
| | AA | 1.295 | - | 1.295 | - |
| | BA | 54.913 | - | 54.913 | - |
| | TMPDE | 0.108 | - | 0.108 | - |
| | EA | - | - | - | - |
| | EHA | - | - | - | - |
| | VEOVA | - | - | - | - |
| ME2 wt fr. | | 0.906 | 0.971 | 0.906 | 0.971 |
| ME2 (ME) compsn. | MMA | - | 2.904 | - | 2.904 |
| | MAA | 38.555 | 35.992 | 38.555 | 35.992 |
| | AA | - | 0.086 | - | 0.086 |
| | BA | - | 3.650 | - | 3.650 |
| | TMPDE | 0.120 | 0.119 | 0.120 | 0.119 |
| | EA | 52.267 | 48.793 | 61.325 | 57.248 |
| | EHA | 4.995 | 4.663 | - | - |
| | VEOVA | 4.063 | 3.793 | - | - |
| ME1 lobe wt fr. | | 0.066 | - | 0.066 | - |
| ME2 (ME) lobe wt fr. | | 0.934 | 1.000 | 0.934 | 1.000 |
| Lobe compsn. | MMA | 2.904 | 2.904 | 2.904 | 2.904 |
| | AA | 0.086 | 0.086 | 0.086 | 0.086 |
| | MAA | 35.992 | 35.992 | 35.992 | 35.992 |
| | BA | 3.650 | 3.650 | 3.650 | 3.650 |
| | TMPDE | 0.119 | 0.119 | 0.119 | 0.119 |
| | EA | 48.793 | 48.793 | 57.248 | 57.248 |
| | EHA | 4.663 | 4.663 | - | - |
| | VEOVA | 3.793 | 3.793 | - | - |
| Solubility parameters | | | | | |
| | seed | 19.32 | 19.32 | 19.32 | 19.32 |
| | ME1 | 18.47 | - | 18.47 | - |
| | ME2 (or ME) | 19.33 | 19.27 | 19.53 | 19.46 |
| Rheology of 1.5 % aq soln | | | | | |
| | G crossover YS (Pa) | 6.16 | 0.33 | 3.46 | 0.46 |
| | G' at crossover (Pa) | 32.23 | 1.50 | 15.44 | 2.31 |
| | G' at 0.1 Pa stress (Pa) | 137.1 | 2.0 | 51.2 | 3.4 |

## Claims

1. Polymer particles having an average diameter from 100 nm to 10 µm, where each particle comprises: (a) a core; and (b) lobes comprising at least 15 wt% polymerized residues of at least one C₃-C₆ carboxylic acid monomer.

2. The polymer particles of claim 1 which are acrylic polymers.

3. The polymer particles of claim 2 in which the core is from 0.1 to 10 wt% of the entire polymer particle and the lobes are from 90 to 99.9 wt% of the entire polymer particle.

4. The polymer particles of claim 3 in which the lobes comprise at least 25 wt% polymerized residues of at least one C₃-C₆ carboxylic acid monomer.

5. The polymer particles of claim 4 in which the lobes are substantially spherical.

6. The polymer particles of claim 5 in which said at least one C₃-C₆ carboxylic acid monomer is methacrylic acid.

7. A thickened aqueous formulation containing polymer particles having an average diameter from 100 nm to 10 µm, where each particle comprises: (a) a core; and (b) lobes comprising at least 15 wt% polymerized residues of at least one C₃-C₆ carboxylic acid monomer; wherein the aqueous formulation has a pH of at least 6.

8. A method for producing polymer particles having an average diameter from 100 nm to 10 µm, where each particle comprises: (a) a core; and (b) lobes comprising at least 15 wt% polymerized residues of at least one C₃-C₆ carboxylic acid monomer; said method comprising steps of: (i) providing a seed particle comprising at least 20 wt% polymerized residues of at least one C₃-C₆ carboxylic acid monomer and at least 0.1 wt% polymerized residues of at least one crosslinker; (ii) suspending the seed particle in an aqueous emulsion with a first monomer mixture having an average Van Krevelen parameter that is lower than that of the seed particle by at least 0.5 J^{0.5}cm^{-1.5} and polymerizing said first monomer mixture; and (iii) adding to the aqueous emulsion a second monomer mixture and polymerizing said second monomer mixture; wherein the first and second monomer mixtures comprise at least 15 wt% C₃-C₆ carboxylic acid monomers, based on total weight of the first and second monomer mixtures.

9. The method of claim 8 in which first monomer mixture has an average Van Krevelen parameter that is lower than that of the seed particle by at least 0.6 J^{0.5}cm^{-1.5}.

10. The method of claim 9 in which the seed particle is from 0.1 to 10 wt% of total weight of the seed particle and the first and second monomer mixtures.

## Patentansprüche

1. Polymerpartikel mit einem durchschnittlichen Durchmesser von 100 nm bis 10 µm, wobei jedes Partikel Folgendes beinhaltet: (a) einen Kern; und (b) Lappen, beinhaltend mindestens 15 Gew.-% polymerisierte Reste von mindestens einem C₃-C₆-Carbonsäuremonomer.

2. Polymerpartikel gemäß Anspruch 1, die Acrylpolymere sind.

3. Polymerpartikel gemäß Anspruch 2, wobei der Kern von 0,1 bis 10 Gew.-% des gesamten Polymerpartikels ist und die Lappen von 90 bis 99,9 Gew.-% des gesamten Polymerpartikels sind.

4. Polymerpartikel gemäß Anspruch 3, wobei die Lappen mindestens 25 Gew.-% polymerisierte Reste mindestens eines C₃-C₆-Carbonsäuremonomers beinhalten.

5. Polymerpartikel gemäß Anspruch 4, wobei die Lappen im Wesentlichen kugelförmig sind.

6. Polymerpartikel gemäß Anspruch 5, wobei das mindestens eine C₃-C₆-Carbonsäuremonomer Methacrylsäure ist.

7. Eine verdickte wässrige Formulierung, die Polymerpartikel enthält, die einen durchschnittlichen Durchmesser von 100 nm bis 10 µm aufweisen, wobei jedes Partikel Folgendes beinhaltet: (a) einen Kern; und (b) Lappen, beinhaltend mindestens 15 Gew.-% polymerisierte Reste von mindestens einem C₃-C₆-Carbonsäuremonomer; wobei die wässrige Formulierung einen pH-Wert von mindestens 6 aufweist.

8. Ein Verfahren zur Herstellung von Polymerpartikeln mit einem durchschnittlichen Durchmesser von 100 nm bis 10 µm, wobei jedes Partikel Folgendes beinhaltet: (a) einen Kern; und (b) Lappen, beinhaltend mindestens 15 Gew.-% polymerisierte Reste von mindestens einem C₃-C₆-Carbonsäuremonomer; wobei das Verfahren die folgenden Schritte beinhaltet: (i) Bereitstellen eines Saatpartikels, das mindestens 20 Gew.-% polymerisierte Reste von mindestens einem C₃-C₆-Carbonsäuremonomer und mindestens 0,1 Gew.-% polymerisierte Reste von mindestens einem Vernetzer beinhaltet; (ii) Suspendieren des Saatpartikels in einer wässrigen Emulsion mit einer ersten Monomermischung, die einen durchschnittlichen Van-Krevelen-Parameter aufweist, der um mindestens 0,5 J^{0,5}cm^{-1,5} niedriger als der des Saatpartikels ist, und Polymerisieren der ersten Monomermischung; und (iii) Hinzugeben einer zweiten Monomermischung zu der wässrigen Emulsion und Polymerisieren der zweiten Monomermischung; wobei die erste und zweite Monomermischung mindestens 15 Gew.-% C₃-C₆-Carbonsäuremonomere, bezogen auf das Gesamtgewicht der ersten und zweiten Monomermischung, beinhalten.

9. Verfahren gemäß Anspruch 8, wobei die erste Monomermischung einen durchschnittlichen Van-Krevelen-Parameter aufweist, der um mindestens 0,6 J^{0,5}cm^{-1,5} niedriger als der des Saatpartikels ist.

10. Verfahren gemäß Anspruch 9, wobei das Saatpartikel von 0,1 bis 10 Gew.-% des Gesamtgewichts des Saatpartikels und der ersten und zweiten Monomermischung beträgt.

## Revendications

1. Particules de polymère ayant un diamètre moyen allant de 100 nm à 10 µm, où chaque particule comprend : (a) un coeur ; et (b) des lobes comprenant au moins 15 % en poids de résidus polymérisés d'au moins un monomère d'acide carboxylique en C₃ à C₆.

2. Les particules de polymère de la revendication 1 qui sont des polymères acryliques.

3. Les particules de polymère de la revendication 2 dans lesquelles le coeur constitue de 0,1 à 10 % en poids de la particule de polymère tout entière et les lobes constituent de 90 à 99,9 % en poids de la particule de polymère tout entière.

4. Les particules de polymère de la revendication 3 dans lesquelles les lobes comprennent au moins 25 % en poids de résidus polymérisés d'au moins un monomère d'acide carboxylique en C₃ à C₆.

5. Les particules de polymère de la revendication 4 dans lesquelles les lobes sont substantiellement sphériques.

6. Les particules de polymère de la revendication 5 dans lesquelles ledit au moins un monomère d'acide carboxylique en C₃ à C₆ est de l'acide méthacrylique.

7. Une formulation aqueuse épaissie contenant des particules de polymère ayant un diamètre moyen allant de 100 nm à 10 µm, où chaque particule comprend : (a) un coeur ; et (b) des lobes comprenant au moins 15 % en poids de résidus polymérisés d'au moins un monomère d'acide carboxylique en C₃ à C₆ ; la formulation aqueuse ayant un pH d'au moins 6.

8. Une méthode pour produire des particules de polymère ayant un diamètre moyen allant de 100 nm à 10 µm, où chaque particule comprend : (a) un coeur ; et (b) des lobes comprenant au moins 15 % en poids de résidus polymérisés d'au moins un monomère d'acide carboxylique en C₃ à C₆ ; ladite méthode comprenant les étapes consistant à : (i) fournir une particule germe comprenant au moins 20 % en poids de résidus polymérisés d'au moins un monomère d'acide carboxylique en C₃ à C₆ et au moins 0,1 % en poids de résidus polymérisés d'au moins un agent de réticulation ; (ii) suspendre la particule germe dans une émulsion aqueuse avec un premier mélange de monomères ayant un paramètre de Van Krevelen moyen qui est inférieur à celui de la particule germe d'au moins 0,5 J^{0,5}cm^{-1,5} et polymériser ledit premier mélange de monomères ; et (iii) ajouter à la solution aqueuse un deuxième mélange de monomères et polymériser ledit deuxième mélange de monomères ; dans laquelle les premier et deuxième mélanges de monomères comprennent au moins 15 % en poids de monomères d'acide carboxylique en C₃ à C₆, rapporté au poids total des premier et deuxième mélanges de monomères.

9. La méthode de la revendication 8 dans laquelle le premier mélange de monomères a un paramètre de Van Krevelen moyen qui est inférieur à celui de la particule germe d'au moins 0,6 J^{0,5}cm^{-1,5}.

10. La méthode de la revendication 9 dans laquelle la particule germe constitue de 0,1 à 10 % en poids du poids total de la particule germe et des premier et deuxième mélanges de monomères.
